# EUROPEAN PATENT APPLICATION

(11) **EP 2 247 032 A1**
(43) Date of publication of application: **03.11.2010**
(21) Application number: 09290306.1
(22) Date of filing: 27.04.2009
(51) Int. Cl.: H04L 12/24, H04L 29/08, G06F 9/44

(54) **Remotely managing an application on a device by a management server**

(71) Applicant: Alcatel Lucent, 75008 Paris (FR)
(72) Inventor: Royon, Yvan, 1000 Brussels (BE); Bouchat, Christele, 2060 Antwerp (BE)
(74) Representative: Narmon, Gisèle Marie Thérèse

(57) **Abstract**

A method is described for remotely managing, by a management server in a telecommunication network, the life cycle of an end-user service application for execution on a service platform that is installed on a device in a private network. The method comprises the steps of:
- transmitting a request for information regarding a finite state machine data model that describes a representation of the finite state machine for the service platform when being used by the service application while running on the device; and
- transmitting data model information by the device to the management server; and
- determining by the management server from the data model information the finite state machine data model; and
- managing the service application by the management server on the device in accordance to the finite state machine data model.

## Description

The present invention relates to a method for remotely managing an end-user service application on a device by a management server and related device and management server.

Such a method and related devices is already known in the art. Indeed, the next generation market for home internet access is about new services i.e. service applications for the end-users. These services are deployed and are running in service platforms. These service platforms are usually implemented by means of software frameworks which are executed on hardware functional devices.

When running a service application on a service platform, such a service application follows a life cycle. Indeed, a service application can be e.g. activated i.e. subscribing to the service application and a service application can be deactivated. Such a life cycle can be represented by a finite state machine.

In the event when a service application must change from one state to another state or when a service application must be created, a management server in the telecommunication network usually sends commands to an end-user device in the private network i.e. more particular to the service platform on the device on which the service application is executed.

It has to be remarked that there exist as many life cycle state machines as there are service platform technologies. Some known service platform technologies are:
- OSGi, a Java-based service platform that can be remotely managed; and
- Xlets such as JavaME CDC which is designed to support applications for Digital TV as part of Sun's JAVA TV specifications; and
- Microsoft .NET Framework which is a software framework available with several Microsoft Windows operating systems; and
- MIDlet which is a Java application framework for the Mobile Information Device Profile MIDP that is typically implemented on a Java-enabled cell phone or other embedded device or emulator. MIDlet service applications are often used for services such as games; and
- Linux package managers; and
- Google Android which is a software platform and operating system for mobile devices, based on the Linux kernel, initially developed by Google and later by the Open Handset Alliance. Google Android allows developers to write managed code in the Java language, controlling the device via Google-developed Java libraries.
- etc.

It has to be explained that when running such a service application on such a service platform, the service application is following a life cycle. Such a life cycle can be represented by a finite state machine, whereby such a finite state machine is uniquely identified by the technology of the service platform upon which the service application is running.

As such, the above mentioned different service platform technologies differ in the definition of their associated state machine. This is because each of the platform technologies focuses on different aspects of deployment and/or on different aspect of the life cycle management. For instance, Xlets supports start and stop semantics, but it does not support install and uninstall semantics, whereas, Linux processes can be paused while OSGi bundles can not be paused. In this way, when the management server is remotely managing the service application on the device, the management server does not known the exact state of the finite state machine at which the executed service application is or should be.

One way to be technology-agnostic would be to define a lowest common denominator state machine that would fit for all the different technologies. In this way one common redefined state machine would have to be defined on all devices in the network i.e. predefining the possible states and predefining the links between these possible states. The problem herewith is that it seems to be difficult to define such a lowest common denominator state machine efficiently by design. This will be explained by means of an example. For instance, the UPnP Universal Plug and Play Device Management state machines are both, a subset of the Linux one and a superset of the Xlets one. By attempting to compromise between the Linux and Xlets service platform technologies, there is a risk of ending up with none of their specific advantages. Indeed, the risk exists that on one of the devices the state machine will not get out of one of the redefined states of the state machine or on the other hand, a command might be sent by the management server that can not be executed by a device whereby an error will be returned. Furthermore, this approach of common denominator might provide problems to interoperate with future service platform technologies. The common denominator would have to be updated repeatedly.

An object of the present invention is to provide a method for remotely managing the life cycle of an end-user service application for execution on a service platform installed on a device and a management server and device executing the method, such as the above described ones but wherein the above problems are overcome.

According to the invention, this object is achieved due to the fact that the method comprises a step of
- transmitting, by a requesting means of the management server to a device receiving means of the device, a request for information regarding the finite state machine data model that describes a representation of the finite state machine for the service platform which is used by the service application when running on the device; and
- transmitting, by a device transmitting means of the device to a receiving means of the management server, data model information by the device to the management server; and
- determining, by the receiving means of the management server, from the data model information the finite state machine data model; and
- managing, by a managing means of the management server, the service application by the management server on the device in accordance to the finite state machine data model.

Indeed, based on the finite state machine data model, the management server can understand the finite state machine associated to the service application and use it in its internal logic.

Hereby, exact remote management of the service application by the management server on the device in accordance to the finite state machine data model is enabled. Indeed, by requesting for information regarding the finite state machine data model, the management server is enabled to follow for the service application its right state in the right finite state machine. Each remote command that is submitted by the management server towards the device regarding the execution of the service application can be followed in the right finite state machine. By describing the finite state machine of the life cycle of the service application in a data model, the device indicates which service platform technology it is using along with its state machine. The management server is hereby enabled to make the best use of this state machine.

Moreover, this approach is also future proof, in the sense that it allows new service platform technologies and new versions of existing service platform technologies to be fully discovered, integrated and managed by the management server.

Another advantage of the present invention is that there is no need to manually specify the list of service platform technologies managed by a management server. It is therefore simpler to deploy heterogeneous private networks and devices, since the management server will auto-adapt.

A preferred embodiment of the basic idea is the situation when the data model information is accomplished by the complete finite state machine data model itself. In this way, the determining step becomes in fact void and is not executed explicitly i.e. the received data model information is forwarded as such to the managing means of the management server.

Furthermore, it has to be explained such a finite state machine data might comprise technology service platform information, a description of a list for all the possible states of the state machine that represents the life cycle of the service application, and a description of a list for all the allowed transitions between the possible states.

An alternative implementation is described for the event when the data model information is accomplished by technology service platform information. Hereby the step of determining is realized by retrieving, the finite state machine data model, based upon the technology service platform information, from a data base of finite state machine data models. This step is also executed by the receiving means of the management server. It has to be remarked that the technology service platform information usually comprises the type of the service platform implementation technology such as e.g. OSGi and the version number of the service platform implementation technology.

Finally it has to be explained that the data base of finite state machine data models can be comprised in the management server itself but might as well be located further in the telecommunication network. When the data base is located outside the management server the step of retrieving is performed via the northbound interface of the management server.

The proposed solution is the only way that a management server for service platforms can be truly technology agnostic. With this technique, the management server will not need to be upgraded, nor its standards revised, each time a service platform technology changes or is created. Existing and future state machines will always be seamlessly taken into account by a running management server. In addition, the management server is hereby enabled to manage different type of service platforms, with different state machines. It is also future proof in the event when a new state is created since there is no need to change the remote management protocol.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Furthermore, it is to be noticed that the term 'coupled', used in the following description of an embodiment, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

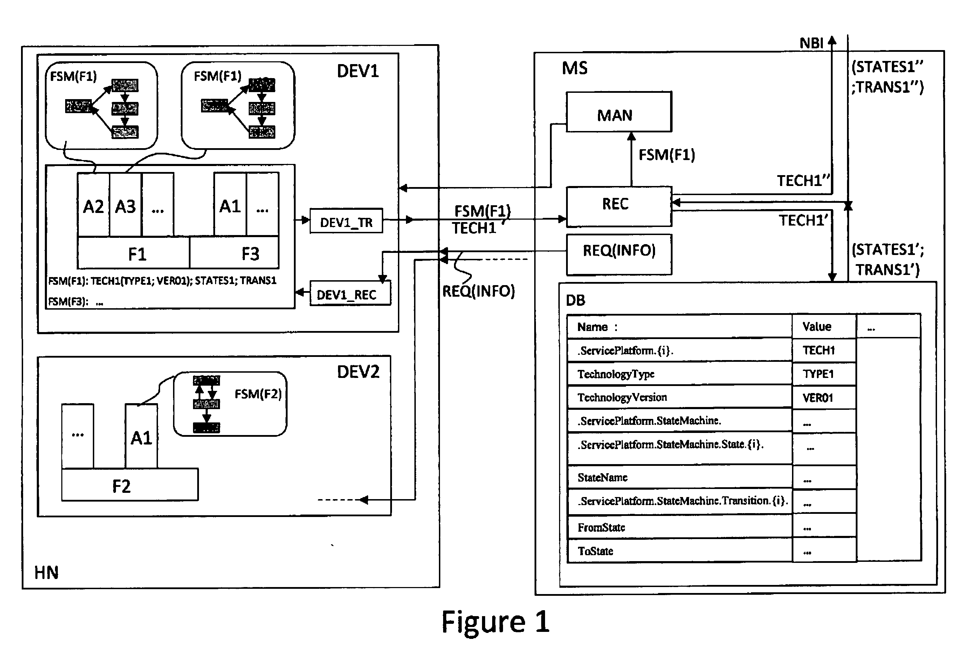

The above and other objects and features of the invention will become more apparent and the invention itself will be best understood by referring to the following description of an embodiment taken in conjunction with the accompanying drawings wherein Figure 1 represents an Access Network with a Home Network HN and a Management Server MS coupled thereto.

The Home Network HN comprises as a matter of example two devices a first device DEV1 and a second device DEV2. The first device DEV1 can be implemented by e.g. a compact disc player with reader/writer with a first service platform F1 for execution of e.g. two remote controllable service applications A2 and A3, and another service platform F3 for execution of e.g. a remote controllable service application such as A1. The respective finite state machines for service application A2 and A3 are shown as an example. Since both service applications are running on the same service platform, its finite state machine are similar i.e. FSM(F1). However, it has to be understood that at a certain time moment one service application can find itself in one state whilst the other service application is in another state. This is shown in Figure 1 by means of A1 and A3 in the different states of a similar state machine.

The second device DEV2 is e.g. implemented by an mp3-player with its basic capabilities for playing and storing music, but also with additional capabilities of e.g. directly downloading music from the IP internet. Presume that one of the remote controllable service applications is e.g. service application A1 which ought to run on a service platform F2. Here also, as a matter of example, another finite state machine, called FSM(F2) is shown since another service platform F2 is applied.

Both devices also comprises a receiver called device receiver and a transmitter, called device transmitter i.e. for DEV1 i.e. respectively DEV1_REC and DEV1_TR (these functional blocks are not shown in Figure 1 for DEV2).

The device receiver DEV1_REC and device transmitter DEV1_TR are both coupled on one side to a service platform controller that comprises e.g. the service platforms F1 and F3 and on the other side via an interface of DEV1 to the Management Server MS in the access network. The service platform controller comprises information regarding the present service platforms F1 and F3. In this way the technology service platform information TECH1 for service platform F1 comprises the type TYPE1 (e.g. OSGi) of the service platform implementation technology and the version number of the service platform implementation technology e.g. VER01. Furthermore, the service platform controller might as well comprise a full description of the representation of the finite state machines being associated to service platform F1 and service platform F3. In this way the service platform controller comprises a description of the Finite State Machine of F1 i.e. FSM(F1) with a list for all the possible states of service platform F1 i.e. STATES1 and a list for all the allowed transitions between the possible states i.e. TRANS1.

The Management Server comprises a requesting means REQ(INFO) being coupled to the device receiving means DEV1_REC; a receiving means REC being coupled to the device transmitting means DEV1_TR of the device DEV1 and being coupled to a managing means MAN and to a database of finite state machine models of the Management Server MS. The receiving means REC is also coupled to the Northbound Interface NBI of Management Server MS.

The working of the device DEV1 and the management server MS according to the present application in accordance with its telecommunication environment that is shown in Figure 1 will be explained by means of a functional description of the different blocks listed above. Based on this description, the practical implementation of the blocks will be obvious to a person skilled in the art and will therefore not be described in details. In addition, the principle working of the method to remotely manage an end-user service application for execution on a service platform will be described in further detail.

Presume the situation whereby the end-user of the device DEV1 desires to use the service application A2 whereby this service application needs to be installed by management server MS at the device DEV1. In order to properly remotely control this service application A2, and according to the present application, the management server MS needs to acquire the knowledge about the unique finite state machine data model FSM(F1) of the service platform F1 upon which the service application A2 should run. Therefore the following steps are executed by the following functional blocks:
- transmitting, by the requesting means REQ(INFO) of the management server MS to the device receiving means DEV1_REC of the device DEV1, a request for information REQ(INFO) regarding the finite state machine data model that describes a representation of the finite state machine for the service platform which is used by the service application A2 when running on the device; and
- transmitting, by the device transmitting means DEV1_TR of the device DEV1 to a receiving means REC of the management server MS, data model information; and
- determining, by the receiving means REC, based upon the data model information the finite state machine data model FSM(F1) for the service platform F1; and
- managing, by the managing means MAN, the service application A2 in accordance to the finite state machine data model FSM(F1).

Presume that the finite state machine data model FSM(F1) is available at the device DEV1 itself. In such a situation the device DEV1 can as well provide the complete finite state machine information FSM(F1: TECH1(TYPE1; VER01); STATES1; TRANS1) directly to the management server. In this way, the data model information is in fact accomplished by the finite state machine data model FSM(F1) itself.

However, in the event when e.g. the complete description of the requested information is not present; or when e.g. upstream bandwidth should be saved between the device DEV1 and management server MS; or when e.g. the request for information REQ(INFO) comprises in fact a first attempt of only requesting for technology service platform information, the transmitted data model information is accomplished by only the technology service platform information TECH1. This means that the transmission of the technology service platform information TECH1(TYPE1; VER01) from the device DEV1 towards the management server MS can be the result of an explicit request for it in the request for information REQ(INF0) or can be the decision of a controller of the device DEV1 that decides to transmit only this part of information i.e. the technology service platform information TECH1(TYPE1; VER01). Upon reception of only the technology service platform information TECH1(TYPE1; VER01), the step of determining is realized by retrieving, the complete finite state machine data model, based upon the received technology service platform information TECH1, from a data base DB of finite state machine data models. As shown in Figure 1, this step is also executed by the receiving means REC of the management server.

It has to be explained that in Figure 1 both situations of feedback are shown i.e. FSM(F1) and TECH1 are shown next to the arrow from the device DEV1 to the management server MS. However, it has to be understood that, upon a request for information REQ(INFO) only one of both kind of data model information is provided back to the management server MS. Indeed, upon transmission of the request for information REQ(INFO), the device DEV1 is responding with either transmission of the complete information of the finite state machine data model FSM(F1) or either the transmission of only technology service platform information TECH1.

As already mentioned before, the data base DB of finite state machine data models can be comprised by the management server itself but might as well be located further in the telecommunication network. When the database is included in the management server MS the arrow with TECH' is to be followed. Here upon, the description of the list of different states STATES' and the list of possible and allowed transitions TRANS' is provided to the receiving means. However, according to another situation, when the data base is located outside the management server MS the step of determining/retrieving is performed via the northbound interface NBI of the management server MS which is shown in Figure 1 by means of the arrow with TECH" and the provide feedback is shown by means of STATES" and TRANS". It has to be understood that either one of both or both situations together can be implemented in the management server MS.

This following detailed description describes a possible implementation of the present method and devices and of the different messages between the device DEV1 and the management server MS i.e. by means of the BroadBand Forum's TR-069 management protocol. The general idea is to have a management object that describes the finite state machine. This includes a definition of the information on the technology used and its version, the list of possible states and the list of all allowed transitions between these different states. Based on this information, the Management Server MS will be able to understand the finite state machine and use the management object in its internal logic. A possible extension for the BroadBand Forum TR-106 data model and the TR-069 RPCs - Remote Procedure Call is described below.

A data model is defined under a Root Object in TR-106 which is also shown in an abstract way in the database DB in Figure 1.
Name : .ServicePlatform.{i}.
Type: Object
Description : each entry in this table contains the description of a service platform

Name: TechnologyType
Type : String
Description : name of the service platform implementation technology

Name : TechnologyVersion
Type : String
Description : version number of the service platform implementation technology

Name : ServicePlatform.StateMachine
Type : Object
Description : this object represents the state machine for this service platform

Name : .ServicePlatform.StateMachine.State.{i}.
Type : Object
Description : each entry in this table represents a state in the state machine. At most one entry in this table can exist with a given value for StateName.

Name : StateName
Type : String [A-Z]
Description : unique textual name of the state. It must contain only uppercase alphabetic characters

Name : .ServicePlatform.StateMachine.Transition.{i}.
Type : Object
Description : this table contains all legal transitions in the state machine. At most one entry in this table can exist with a given pair of values for FromState and ToState.

Name : FromState
Type : String [A-Z]
Description : the name of the state the transition starts from. It MUST be a legal state name, that is, it is an Enumeration of the values found in .ServicePlatform.StateMachine.State.{i}. StateName

Name : ToState
Type : String [A-Z]
Description : the name of the state the transition ends into. It MUST be a legal state name, that is, it is an Enumeration of the values found in .ServicePlatform.StateMachine.State.{i}. StateName.

A Remote Procedure Call RPC can be defined:
ChangeState: this method must be used by the Management Server MS to request the Device DEV1 for transition of a software module of a service application from one state to another e.g. from state "Started" to state "Stopped".

The ChangeState arguments:
Argument: Module
Description : the reference, hereafter called module ID, towards the service application that must change from state. It must be a legal module ID, and it must be consistent with how modules are usually identified

Argument: FromState
Type : String [A-Z]
Description : the name of the current state of the module. It must be a legal state name i.e. it is an Enumeration of the values found in .ServicePlatform.StateMachine.State.{i}. StateName

Argument : ToState
Type : String [A-Z]
Description : the name of the state to change the module to. It must be a legal state name i.e. an Enumeration of the values found in .ServicePlatform.StateMachine.State.{i}. StateName

Based on the above TR069 possible implementation, an associated scenario is :
- A Device DEV1 tells the Management Server MS which service platform F1 it is running i.e. in particular which standard it follows.
- In the event when the Management Server MS knows this standard, e.g. OSGi R4, the knowledge can be re-used for the remote control of the device DEV1 since the associated finite state machine is known. Otherwise, the Management Server MS launches a request for information REQ(INFO) and receives in this way the finite state machine data model FSM(F1) from the device transmitting means DEV1_TR of the Device DEV1.
- When the Management Server MS wants to perform a state change for a certain module on the Device DEV1, the Management Server MS checks first at the finite state machine data model FSM(F1) whether the transition is legal and then uses the ChangeState Remote Procedure Call.
- The Device DEV1 tries to perform the change and sends back an error code in case of failure.
- In the event when, for whatever reason, a module changes state on the Device DEV1 happens, the device DEV1 sends an Active Notification to the Management Server MS.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for remotely managing, by a management server (MS) in a telecommunication network, an end-user service application (A2) for execution on a service platform (F1) installed on a device (DEV1) in a private network, **characterized in that** said method comprises the step of
- transmitting a request (REQ(INFO)) for information regarding the finite state machine data model (FSM(F1)) that describes a representation of the finite state machine for said service platform (F1) being used by said service application (A2) when running on said device (DEV1); and
- transmitting data model information by said device (DEV1) to said management server (MS); and
- determining by said management server (MS) from said data model information said finite state machine data model (FSM(F1)); and
- managing said service application (A1) by said management server (MS) on said device (DEV1) in accordance to said finite state machine data model (FSM(F1)).

2. The method for remotely managing an end-user service application (A2) according to claim 1, **characterized in that** said data model information is accomplished by said finite state machine data model (FSM(F1)).

3. The method for remotely managing an end-user service application (A2) according to claim 1, **characterized in that** said finite state machine data model (FSM(F1)) comprises technology service platform information (INF1), possible states (STATES) and allowed transitions (TRANS) between said possible states.

4. The method for remotely managing an end-user service application (A2) according to claim 1, **characterized in that** said data model information is accomplished by technology service platform information (TECH1) whereby said step of determining is realized by retrieving, based upon said technology service platform information (TECH1), from a data base of finite state machine data models, said finite state machine data model (FSM(F1)).

5. The method for remotely managing an end-user service application (A2) according to claim 4, **characterized in that** said step of retrieving is performed via the northbound interface of said management server (MS).

6. A management server (MS) in a telecommunication network, for remotely managing an end-user service application (A2) for execution on a service platform (F1) installed on a device (DEV1) in a private network, **characterized in that** said management server (MS) comprises
- requesting means (REQ(INFO)) for requesting information regarding the finite state machine data model (FSM(F1)), said finite state machine data model (FSM(F1)) describing a representation of the finite state machine for said service platform (F1) being used by said service application (A2) while running on said device (DEV1); and
- receiving means (REC) for receiving from said device (DEV1) data model information and for determining from said data model information said finite state machine data model (FSM(F1)); and
- managing means (MAN) for managing said service application (A1) on said device (DEV1) in accordance to said finite state machine data model (FSM(F1)).

7. The management server (MS) according to claim 6, **characterized in that** said data model information is accomplished by said finite state machine data model (FSM(F1)).

8. The management server (MS) according to claim 6, **characterized in that** said data model information is accomplished by technology service platform information (TECH1) whereby said receiving means (REC) is further comprised for retrieving, based upon said technology service platform information (TECH1), from a data base of finite state machine data models, said finite state machine data model (FSM(F1)) in order to thereby realize said determining.

9. A device (DEV1) in a private network for being remotely managed, by a management server (MS) in a telecommunication network, for execution of an end-user service application (A2) on a service platform (F1) of said device (DEV1), **characterized in that** said device (DEV1) comprises
- device receiving means (DEV1-REC) for receiving a request (REQ(INFO)) for information regarding a finite state machine data model (FSM(F1)), said finite state machine data model (FSM(F1)) describing a representation of the finite state machine for said service platform (F1) being used by said service application (A2) while running on said device (DEV1); and
- device transmitting means (DEV1-TR) for transmitting data model information to said management server in order to thereby enable said management server (MS) to determine from said data model information said finite state machine data model (FSM(F1)) and to manage said service application (A1) on said device (DEV1) in accordance to said finite state machine data model (FSM(F1)).

10. The device (DEV1) according to claim 9, **characterized in that in that** said data model information is accomplished by said finite state machine data model (FSM(F1)).

11. The device (DEV1) according to claim 9, **characterized in that in that** said data model information is accomplished by technology service platform information (TECH1).
